# EUROPEAN PATENT APPLICATION

(11) **EP 1 953 631 A1**
(43) Date of publication of application: **06.08.2008**
(21) Application number: 07101711.5
(22) Date of filing: 05.02.2007
(51) Int. Cl.: G06F 3/048, G06F 17/30

(54) **Method for retrieving a record from a database**

(71) Applicant: ShockFish S.A., 1015 Lausanne (CH)
(72) Inventor: Meier, Roger, 1006, Lausanne (CH)
(74) Representative: Leman Consulting S.A.

(57) **Abstract**

The present invention concerns a method for retrieving a record from a database containing a plurality of records, each record containing at least a record entry that can be sorted according to at least one sort criterion. The method of the invention comprises the following steps :
- sorting the records according to the sort criterion applied on the record entries;
- dividing the plurality of records into groups, each group containing at least two records, the first record of the group being the header record;
- extracting the header record of each group to create an index list;
- associating two consecutive header records of the index list to create a first selection item;
- defining a second selection item by associating two consecutive header records, the first header record of the second selection item being the second header record of the first selection item;
- displaying the first and second selection items by displaying each header records once, thus defining three header records, the first selection item being the result of grouping the first and the second header records, the second selection item being the result of grouping the second and the third header records,
- choosing a selection item by the user;
- retrieving from the records database, the records belonging to the group defined by the chosen selection item first header record, and adding to the retrieved records, the second header record of said selection item;
- choosing a record from the retrieved records.

## Description

### TECHNICAL FIELD

The present invention concerns a method for retrieving a record from a database containing a plurality of records. More particularly, it finds an application in devices having a memory for storing the records and a display for displaying one or a set of records. This method is particularly useful in devices where the available space for displaying data is limited. This is especially the case in devices such as mobile phone or PDAs for example.

### BACKGROUND ART

Presently, a lot of different types of devices have a memory for storing data under the form of a list of records. Usually, these records can be sorted according to one or several sort criterion and the sorted records can be displayed on a display of said device. This is the case among other for a list of names in a mobile phone, a list of tunes in a MP3 player, a list of appointments on a PDA or any similar list on a similar device.

As a present tendency, these devices becomes always smaller in order to be always less cumbersome. As a result, the display also becomes always smaller to the prejudice of the visibility. Also due to the small size of such devices, the user interface is often limited to a few directional buttons. Slider phone designs have an open and a closed mode. In the closed mode, there are only a few buttons available to access the functions of the phone. More and more records are stored in the memory leading to always longer lists. Thus, there is a need for proposing a new method for retrieving and displaying the records that are stored in the database of the device, in order to offer an optimal visibility despite of the reduced available space. There is also a need for fast access of items contained in long lists with only a limited number of available buttons.

In the existing methods, there are two approaches which are currently used. According to a first approach, the records are sorted according to a predefined criterion and are simply displayed in the sorted order. On the display, often, one of the records is highlighted and it is possible to move the highlight in order to select one record.

This has the drawback that detailed information is displayed for each record, even if only one of them is sought, thus making a search very cumbersome.

In some other cases, only a record entry, for example a name is displayed. It may also be possible to obtain additional information by selecting the highlighted record and for example pushing a button on the device. If the list of records is long, it is also laborious to find the searched record.

According to the second approach, the records are divided in sets of records. In the existing devices, to show the representation of such a set, the first record and the last record of each set is displayed. This requires a lot of space and is not optimal in devices with small displays. The last record of one set being the neighbour of the first second of the next set, very similar information is displayed twice on the screen. This is a loss of space and represents a drawback in devices where the space is an important issue. Often the first or the last records of a set have to be truncated to fit on a line of a small display.

### DISCLOSURE OF INVENTION

The present invention proposes a method to obviate the drawbacks of the prior art by proposing a method for retrieving records from a database in such a way that these records can be displayed by using the maximum of available space while making the search of a specific record quick and easy.

In this method, the records are first processed in the device, in order to form groups. These groups are also processed in order to retrieve a selected set of records that will enable to perform a quick search without requiring the display of a great amount of data. Thus, thanks to the optimal processing of the records of the database prior to the displaying of these records, it will be possible to carry out a search on an optimal way.

The object of the invention is reached by a method for retrieving a record from a database containing a plurality of records, each record containing at least a record entry that can be sorted according to at least one sort criterion, said method comprising the steps of :
- sorting the records according to the sort criterion applied on the record entries;
- dividing the plurality of records into groups, each group containing at least two records, the first record of the group being the header record;
- extracting the header record of each group to create an index list;
- associating two consecutive header records of the index list to create a first selection item;
- defining a second selection item by associating two consecutive header records, the first header record of the second selection item being the second header record of the first selection item;
- displaying the first and second selection items by displaying each header records once, thus defining three header records, the first selection item being the result of grouping the first and the second header records, the second selection item being the result of grouping the second and the third header records,
- choosing a selection item by the user;
- retrieving from the records database, the records belonging to the group defined by the chosen selection item first header record, and adding to the retrieved records, the second header record of said selection item;
- choosing a record from the retrieved records.

### BRIEF DESCRIPTION OF DRAWINGS

The present invention and its advantages will be better understood with reference to the enclosed drawings and to the detailed description of a particular embodiment, in which:
- Figure 1 shows a list of records as stored in a memory of a device, once sorted according to a sort criterion;
- Figure 2 shows a selection of the records of Figure 1;
- Figure 3 illustrates the display of the records as they appear further to different steps of the method of the invention;
- Figure 4 is an alternative of Figure 3; and
- Figure 5 is a bloc diagram showing the method of the invention.

### BEST MODE FOR CARRYING OUT THE INVENTION

The method of the invention is described below with reference to the Figures which concern an application where a list of names is stored in a database DB. In this application, we will describe the case where the method of the invention is used to retrieve one name from this list. The device could be for example a PDA or a mobile phone. It should be understood that any other kind of list or any other kind of similar device could be used.

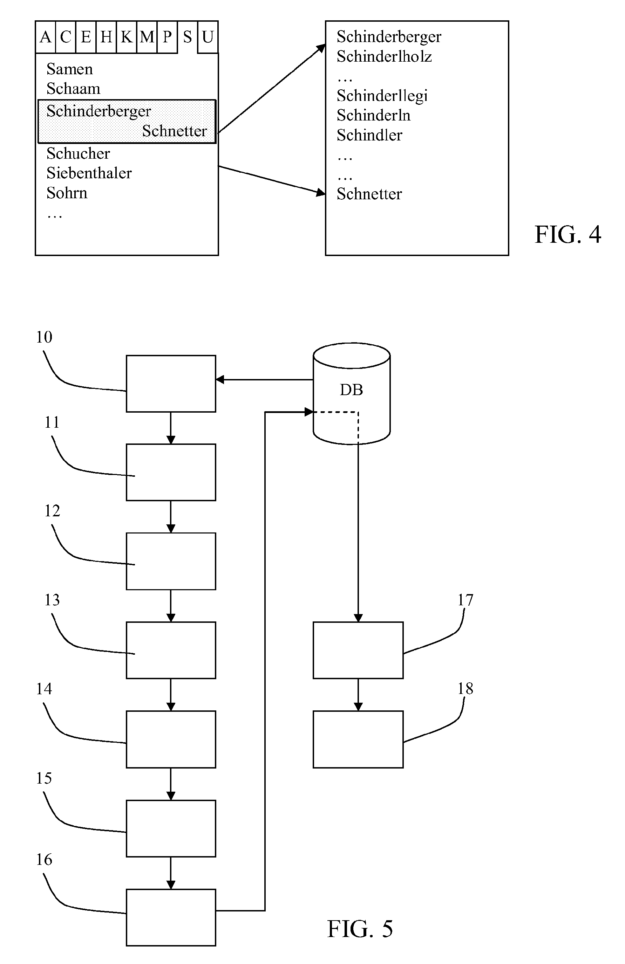

In the database, each record corresponds to at least one record entry. These record entries can be sorted according to a sort criterion. This is illustrated by step 10 of Figure 5. As an example, the records could be a list of first names, family names, complete address and phone numbers. The record entries could be the family name of each record and the sort criterion could be the alphabetic order.

In a similar way, the records could be pieces of music and the record entries could be an arbitrary order number, the name of the composer or any other suitable value.

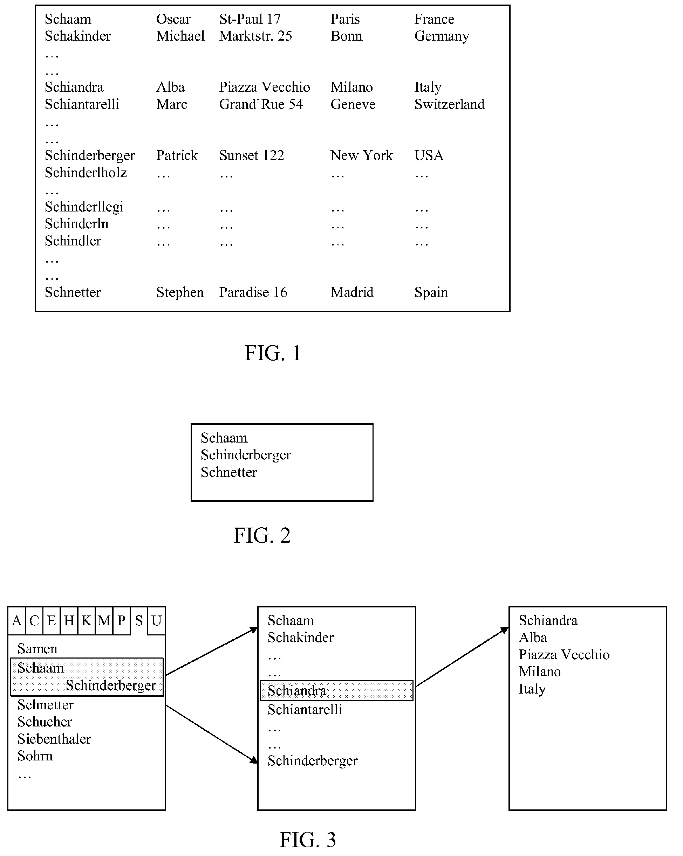

Fig 1 illustrates a list of records, i.e. names and addresses. These records are stored in the database DB of the device in any order. However, they can be sorted according to at least one selected criterion. In the illustrated example, the records are sorted by alphabetic order according to the family name, corresponding to the first field of each record. This corresponds to step 10 of Figure 5.

The next step of the method of the invention, illustrated by step 11 of Figure 5 consists in dividing the records into groups containing at least two records. These groups are formed in such a way that all the records belong to one group and there is no overlap between the groups. Each group can contain a different number of records or the same number if the total number of records can exactly be divided by the number of groups. As an example, a list of 155 names could be divided into 10 groups containing each 15 names and one group containing the 5 remaining names. The first record of each group is the header record.

Once these groups are created, the header record of each group is extracted from the database. All the header records are listed following the sort criterion to form an index list. This index list is illustrated by Figure 2. The step of creating the index list corresponds to reference 12 of Figure 5.

Two consecutive elements of the index list are associated to create a selection item (Step 13 of Figure 5). However, these elements are associated in such a way that there is an overlap between two consecutive selection items. As an example, the first and second header records of the index list form together the first selection item. The second and the third header records of the index list form together the second selection item. The third and the fourth header records of the index list form together the third selection item and so on until the penultimate and the last header records of the index list which form together the last selection item.

Once these operations are fulfilled, the index list is displayed on the display of the device. This corresponds to step 14 on Figure 5. In the preferred embodiment, each record of the index list is displayed on a different line in such a way that each record can use the maximal available space. However, one of the selection items, i.e. two consecutive records of the index list, are displayed prominently in such a way that it is clear which of the selection items is presently selected. This can be done in any suitable way, and among other by displaying the records in bold or with other colours or by shifting the records on one side of the display. In Figures 3 and 4, two consecutive selection items are displayed on the left part of said figures, with a border to underline this item. As can be seen by comparing Figures 3 and 4, the first record of a selection item can be displayed differently from the second record of the same selection item. The first record could be for example aligned on the left side of the display and the second record could be aligned on the right side of this display. As a same record belongs to two different selection items, this means that one record would be displayed once on the left side of the display, as it is the first record of a selection item, and once on the right side of the display, as it is the second record of the previous selection item.

This enables the user to select an item, for example by scrolling among the item list. This corresponds to step 15 on Figure 5. As the records are sorted according to the chosen sort criterion, the user can deduce, when he is looking for a specific record, to which selection item this specific record belongs.

When the selection item is chosen, the next step of the method works as follows. The first header record of the chosen selection item is retrieved. (Step 16 of Figure 5). This record is the header of a group of records as defined above. A new list of records is formed by retrieving all the records belonging to this group and by adding the second header record of the chosen selection item. This corresponds to step 17 of Figure 5. This new list can now be displayed. An example of such a list is displayed on the central part of Figure 3 and on the right hand part of Figure 4. The user can choose one record in this list, for example by scrolling among this list. This corresponds to step 18 of Figure 5 and is illustrated by the right hand part of Figure 3.

In the described embodiment, all the selection items are displayed once they are created. However, it is possible to add an additional selection criterion which can be particularly useful when there is a great number of selection items. This additional selection criterion could have the form of thumbnails or tabs, each thumbnail or tab containing for example one or a restricted group of letters of the alphabet. In this case, to quickly access selection items further down in the list, the user could choose the thumbnail or tab containing for example the letters R-S-T. This is illustrated by Figure 3 and 4. In this case, the method of the invention would work as described above.

Thanks to the processing of the data contained in the database prior to displaying it, it is possible to realise a quick selection of a specific record even if the complete list contains a great number of records and even if the available space for displaying said records is limited.

## Claims

1. Method for retrieving a record from a database containing a plurality of records, each record containing at least a record entry that can be sorted according to at least one sort criterion, said method comprising the steps of :
- sorting the records according to the sort criterion applied on the record entries;
- dividing the plurality of records into groups, each group containing at least two records, the first record of the group being the header record;
- extracting the header record of each group to create an index list;
- associating two consecutive header records of the index list to create a first selection item;
- defining a second selection item by associating two consecutive header records, the first header record of the second selection item being the second header record of the first selection item;
- displaying the first and second selection items by displaying each header records once, thus defining three header records, the first selection item being the result of grouping the first and the second header records, the second selection item being the result of grouping the second and the third header records,
- choosing a selection item by the user;
- retrieving from the records database, the records belonging to the group defined by the chosen selection item first header record, and adding to the retrieved records, the second header record of said selection item;
- choosing a record from the retrieved records.

2. Method for retrieving a record according to claim 1, **characterized in that** it further comprises the steps of, prior to dividing the records into groups, dividing the records contained in the database into at least two sets of records, and of dividing the records of one of said sets of records into groups.

3. Method for retrieving a record according to claim 2, **characterized in that** the set of records is formed by selecting records that fulfil a defined selection criterion.

4. Method for retrieving a record according to claim 3, **characterized in that** said selection criterion is at least an alphabetic value.

5. Method for retrieving a record according to claim 3, **characterized in that** said selection criterion is at least a numerical value.

6. Method for retrieving a record according to claim 1, **characterized in that** said sort criterion can be chosen among a set of selection criteria.

7. Method for retrieving a record according to claim 1, **characterized in that** said criterion depends on the records to be retrieved.

8. Method for retrieving a record according to claim 1, **characterized in that** it comprises the step of displaying two consecutive header records forming a selection item in a way that is different from the other displayed header records.

9. Method for retrieving a record according to claim 8, **characterized in that** said step of displaying the two consecutive header records comprises a step of shifting one of said header records with regard to the other header record.
